(19)

Europäisches
Patentamt
European
Patent Office
Office européen
des brevets

(11) **EP 4 546 198 A1**

(12) **EUROPEAN PATENT APPLICATION**

(43) Date of publication:
**30.04.2025 Bulletin 2025/18**

(21) Application number: **24208311.1**

(22) Date of filing: **23.10.2024**

(51) International Patent Classification (IPC):
**G06F 30/13** (2020.01)   **B44C 1/28** (2006.01)
**B44C 3/12** (2006.01)   G06F 111/20 (2020.01)
B44F 11/04 (2006.01)   E04F 13/00 (2006.01)
E04F 15/00 (2006.01)   G09B 25/04 (2006.01)

(52) Cooperative Patent Classification (CPC):
**G06F 30/13; B44C 3/123; E04F 13/0871;**
E04F 2203/023; E04F 2203/026; G06F 2111/20;
G09B 25/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 IT 202300022602**

(71) Applicants:
• **Imbrauglio, Costantino**
  **20161 Milan (IT)**
• **Bernardini, Paolo Giovanni**
  **20124 Milan (IT)**

(72) Inventor: **IMBRAUGLIO, Costantino**
  **20161 Milan (IT)**

(74) Representative: **PGA S.p.A.**
  **Via Mascheroni, 31**
  **20145 Milano (IT)**

(54) **PROCESS FOR MAKING ORDERED DECORATIVE MODULAR GRIDS**

(57)    A process for making ordered decorative modular grids comprises: fabricating a plurality of decorative modules (1) all having a same outline and a same ornamental pattern, affixing at least one positioning symbol on the modules themselves, generating, through an electronic computing unit (105), a plurality of positioning matrices and corresponding virtual ordered decorative modular grids, choosing one of the virtual ordered decorative modular grids and arranging the decorative modules (1) according to the positioning matrix corresponding to the chosen virtual ordered decorative modular grid.

FIG.1

EP 4 546 198 A1

**Description**

Field of the invention

The present invention has as its object a process for making ordered decorative modular grids. The present invention also has as its object an apparatus and a computer program for making ordered decorative modular grids. The present invention finds particular application in the field of surface decoration such as, for example but not exclusively, floors and walls.

Background of the invention

In the decorative field it is common the use of modules and modular grids, also said "pattern". For example, the tiles of a floor or the panels covering a wall are modules. Such tiles and such panels, when placed side by side on the floor and on the wall in such a way as to saturate the surface, that is, to fill the surface without leaving gaps, form a modular grid. The patterns present on the modules juxtaposed between them form overall a decoration of the surface. Industrial decorative schemes obtained with modules that are all the same, i.e., they all have the same pattern, which are placed side by side all with the same orientation are known.

It is also known the document WO2008103449A1, which shows a textile design comprising a repeated pattern along the length and width of a fabric. The pattern comprises a series of substantially square, substantially identical modules, variously oriented with respect to each other in fixed positions within the pattern, where each module comprises at least two visually distinct shades and each module comprises at least two peripheral edges with a substantially identical arrangement of shades.

Summary

In the field of mass-produced, i.e., industrially manufactured, modules for making modular grids described above, the applicants noted that these modules define one overall decoration. This overall decoration is immediately recognizable by looking at the individual module.

In this field, the applicants have therefore perceived the need to make modular grids by means of modules that are equal to each other, preferably mass-produced, which allow to obtain a plurality of visually appreciable and unique overall decorations. The applicants have in particular perceived the need to propose a process for making modular grids from modules that are equal to each other, which allows to obtain a multitude of possible overall pleasing and recognizable decorations.

The applicants have also perceived the need to propose a process for making modular grids applicable at the industrial level and with relatively low costs.

The applicants have found that the above indicated objectives and others can be achieved by defining a criterion of order or regularity of the modular grids built with all equal modules and equipped with particular features.

The applicants have found that the visual pleasantness and recognizability of the decoration of the decorative modular grids are related to the order or regularity of them, i.e. of positioning matrices that define the position and the orientation of the modules within the decorative modular grid.

The applicants have also found that a parameter for evaluating the order of a positioning matrix may be the compression factor of that positioning matrix. In fact, a data structure, in the specific case a virtual matrix, which is very disordered, i.e., has high entropy, may be compressed less effectively than a virtual matrix with low entropy i.e., whose data are more ordered.

The applicants have finally found that the above indicated objectives and others can be achieved by means of a process for making ordered decorative modular grids according to one or more of the attached claims and/or of the following aspects.

In particular, in a first aspect, the present invention has as its object a process for making ordered decorative modular grids, comprising:

fabricating a plurality of decorative modules all having a same outline and a same ornamental pattern; said outline being a triangle, optionally equilateral, or a rectangle, optionally a square, or a hexagon, optionally regular, so that said decorative modules placed side by side form a decorative modular grid of size N x M having a continuous surface; each decorative module being able to take on in the decorative modular grid a number of orientations P defined by rotations, wherein, for each orientation $P_k$, the ornamental pattern takes on in the decorative modular grid a respective visual appearance different from the visual appearance of a different orientation;

generating, through an electronic computing unit (for example a working station or a PC), a plurality of virtual ordered decorative modular grids by means of the following steps:

a) generating all the obtainable virtual decorative modular grids, each virtual decorative modular grid being uniquely defined by the coordinate pairs $N_i$, $M_j$, and by the orientations $P_k$ of the ornamental modules; each virtual decorative modular grid corresponding to a positioning matrix of dimensions $N \times M$, wherein values of the elements of the positioning matrix are the orientations $P_k$;

b) calculating compression factors of the positioning matrices of the generated virtual decorative modular grids;

c) identifying the virtual ordered decorative modular grids as the virtual decorative modular grids whose positioning matrices have a compression factor less than a predefined value;

choosing (d), optionally through the electronic computing unit, one of the virtual ordered decorative modular grids; arranging the decorative modules according to the values of the positioning matrix corresponding to the chosen ordered decorative modular grid.

In a 1st bis aspect, the method comprises:

generating, through an electronic computing unit, a plurality of virtual ordered decorative modular grids by means of the following steps:

a) generating all the obtainable virtual decorative modular grids, each virtual decorative modular grid being uniquely defined by the coordinate pairs $N_i$, $M_j$, and by the orientations $P_k$ of the decorative modules; each virtual decorative modular grid corresponding to a positioning matrix of dimensions $N \times M$, wherein values of the elements of the positioning matrix are the orientations $P_k$;

b) calculating compression factors of the positioning matrices of each of the virtual decorative modular grids generated in (a);

c) identifying, among all the virtual decorative modular grids generated in (a), the virtual decorative modular grids whose positioning matrices have a compression factor, as calculated in (b), less than a predefined value and tagging them as virtual ordered decorative modular grids; wherein the decorations obtained by arranging the decorative modules according to the values of the positioning matrices corresponding to the virtual ordered decorative modular grids are visually pleasing and recognizable;

arranging/posing the decorative modules according to the values of the positioning matrices corresponding to one of the virtual ordered decorative modular grids; optionally wherein said one of the virtual ordered decorative modular grids is (d) chosen in an automatic way by the electronic computing unit among the virtual ordered decorative modular grids identified in (c).

In a 1st ter aspect according to the preceding aspects, the method comprises: displaying, optionally on a display or on a printed sheet, the chosen virtual ordered decorative modular grid and/or the corresponding positioning matrix, to allow an operator to arrange the decorative modules.

In other words, it is first provided to conceive a decorative module (triangle, square or hexagon with an ornamental pattern) and to mass produce a plurality of all equal decorative modules. Given the orientations P of the chosen decorative module and given the dimensions $N \times M$ of the desired ordered decorative modular grid, it is provided to generate the plurality of virtual ordered decorative modular grids by means of steps a), b), c). One of these is chosen (step d) and the decorative modules are then posed to form that chosen ordered decorative modular grid on the basis of corresponding positioning matrix. The choice (d) can be made automatically by the electronic computing unit or by an attendant/operator viewing the virtual ordered decorative modular grids identified.

In the present description and in the attached claims, as decorative module it is intended a physical element equipped with a face on which is placed the ornamental pattern, wherein as ornamental pattern it is intended any graphic element.

In the present description and in the attached claims, as outline of the decorative module it is intended the perimeter of the face bearing the ornamental pattern.

In the present description and in the attached claims, a single orientation $P_k$ is defined by the position or by the positions of the decorative module in the decorative modular grid, obtained by rotating the decorative module, which provide/s a visual aspect of the respective design different from the visual aspect given by the same decorative module/design with a different orientation. In other words, two positions of the decorative module, obtained by rotating this decorative module, that provide visual aspects of the respective ornamental pattern among them identical define a unique orientation $P_k$.

In the present description and in the attached claims, as ordered decorative modular grid it is intended the grid physically obtained by arranging ornamental patterns on a surface; this physical ordered decorative modular grid has a virtual counterpart in the electronic computing unit used for its generation. The physical decorative module has a virtual counterpart in the electronic computing unit used for generating the modular grids and the positioning matrices in order to identify the ordered decorative modular grid.

The applicants have verified that process for making ordered decorative modular grids object of the present invention allows to very quickly create a multitude of ordered decorative modular grids corresponding to as many pleasing and recognizable overall decorations.

The applicants have also verified that the process according to the present invention can be industrially applied and allows to create such overall pleasing and recognizable decorations with relatively low cost.

The applicants underline that the method according to the invention allows to obtain an aesthetic effect through technical means, and that the technical means are the method steps claimed as "computer implemented invention" in the attached claims, in particular, steps (a), (b), and (c) that allow to identify the virtual ordered decorative modular grids corresponding to visually pleasing and recognizable overall decorations.

Additional optional and non-limiting aspects of the process according to the invention are listed below.

In a 2nd aspect according to at least one of the preceding aspects, the decorative modules are flat and plain elements, such as tiles or panels, or concave or convex, so that they can be arranged on concave or convex surfaces.

In a 3rd aspect according to at least one of the preceding aspects, the decorative modules are configured to decorate floors or walls or surfaces of various kinds or to decorate fabrics, for example to form carpets.

In a 4th aspect according to at least one of the preceding aspects, the decorative modules are realized in stone, fabric, plastic, ceramic, wood, glass and metal.

In a 5th aspect according to at least one of the preceding aspects, the process comprises: affixing on each decorative module at least one symbol (different from the ornamental pattern) indicating the orientation of the decorative module and the same for all decorative modules; optionally said at least one symbol comprising as many different symbols as the orientations of the decorative module, wherein as symbol it is intended a recognizable graphic sign, comprising letters and numbers; optionally the symbols are placed near the sides of the decorative module.

In a 5th bis aspect according to at least one of the preceding aspects, the process comprises: affixing on each decorative module a first positioning code corresponding to the respective coordinate pair Ni, Mj in the chosen ordered decorative modular grid and a second positioning code corresponding to the respective orientation $P_k$ in said chosen ordered decorative modular grid.

In a 6th aspect according to the 5th or 5th bis aspect, arranging/posing the decorative modules comprises: arranging said decorative modules according to said at least one symbol or according to the first positioning code and to the second positioning code.

The applicants have verified that the use of symbols or of the first and second positioning code on the decorative modules allows the personnel in charge to extremely easily and quickly install the chosen ordered decorative modular grid. In fact, it is enough to read the symbols or codes on each decorative module and on the positioning matrix for identifying the orientation and the position with which the module itself is to be placed within the decorative modular grid.

In a 7th aspect according to at least one of the 5th, 5th bis or 6th aspects, each decorative module has a first face, bearing the ornamental pattern, and a second face, opposite to the first face.

In a 8th aspect according to the preceding aspect, said at least one symbol or the first positioning code and/or the second positioning code are affixed on the second face.

In a 9th aspect according to the aspect 7 or 8, said at least one symbol or the first positioning code and/or the second positioning code are affixed on an edge of the decorative module.

In a 10th aspect according to at least one of the aspects from 5 to 9, said at least one symbol or the first positioning code and/or the second positioning code are obtained by moulding, engraving, screen printing or affixing labels bearing said at least one symbol or said codes.

In a 10th bis aspect, the labels are affixed on the ornamental pattern so that they can be removed.

In a 11th aspect according to at least one of the aspects from 5 to 10, said at least one symbol or the first positioning code and/or the second positioning code are numbers, letters or symbols.

In a 12th aspect according to at least one of the aspects from 5 to 11, the process comprises: before arranging/posing the decorative modules, packing in a package the decorative modules equipped with said at least one symbol or of the first positioning code and of the second positioning code and belonging to the chosen ordered decorative modular grid.

In a 13th aspect according to the preceding aspect, packing comprises: arranging in the package the ornamental patterns by ordering them according to the first positioning code.

In a 14th aspect according to the preceding aspect, packing comprises: arranging in the package the decorative modules already oriented according to the second positioning code.

The applicants have verified that in this way, the personnel in charge is exceedingly facilitated in the arrangement of the decorative modules according to the positioning matrix corresponding to the chosen ordered decorative modular grid.

In a 15th aspect according to at least one of the preceding aspects, it is provided to identify the virtual ordered decorative modular grids as the virtual decorative modular grids whose positioning matrices have a compression factor lower than the predefined value and higher than zero.

In a 16th aspect according to at least one of the preceding aspects, the predefined value is 1,5, optionally 0,6, optionally 0,3, optionally 0,2.

In a 17th aspect according to at least one of the preceding aspects, given the number of orientations P equal to two, for dimensions $N \times M$ between four and one hundred, the predefined value is between 1,12 and 0,43; for dimensions $N \times M$ between one hundred and five hundred, the predefined value is between 0,43 and 0,24; for dimensions $N \times M$ between five hundred and one thousand, the predefined value is between 0,24 and 0,21; for dimensions $N \times M$ between one thousand and two thousand, the predefined value is between 0,21 and 0,189; for dimensions $N \times M$ greater than two thousand, the predefined value is between 0,189 and 0,166.

In a 18th aspect according to at least one of the preceding aspects from 1 to 16, given the number of orientations P equal to three, for dimensions $N \times M$ between four and one hundred, the predefined value is between 1,3 and 0,52; for dimensions $N \times M$ between one hundred and five hundred, the predefined value is between 0,52 and 0,33; for dimensions $N \times M$ between five hundred and one thousand, the predefined value is between 0,33 and 0,3; for dimensions $N \times M$ between one thousand and two thousand, the predefined value is between 0,3 and 0,28; for dimensions $N \times M$ greater than two thousand, the predefined value is between 0,28 and 0,25.

In a 19th aspect according to at least one of the preceding aspects from 1 to 16, given the number of orientations P equal to four, for dimensions $N \times M$ between four and one hundred, the predefined value is between 1,4 and 0,56; for dimensions $N \times M$ between one hundred and five hundred, the predefined value is between 0,56 and 0,39; wherein, for dimensions $N \times M$ between five hundred and one thousand, the predefined value is between 0,39 and 0,36; for dimensions $N \times M$ between one thousand and two thousand, the predefined value is between 0,36 and 0,343; for dimensions $N \times M$ greater than two thousand, the predefined value is between 0,343 and 0,318.

In a 20th aspect according to at least one of the preceding aspects from 1 to 16, given the number of orientations P equal to six, for dimensions $N \times M$ between four and one hundred, the predefined value is between 1,46 and 0,6; for dimensions $N \times M$ between one hundred and five hundred, the predefined value is between 0,6 and 0,456; wherein, for dimensions $N \times M$ between five hundred and one thousand, the predefined value is between 0,456 and 0,437; for dimensions $N \times M$ between one thousand and two thousand, the predefined value is between 0,437 and 0,424; for dimensions $N \times M$ greater than two thousand, the predefined value is between 0,424 and 0,4.

In a 21st aspect according to at least one of the preceding aspects from 1 to 16, given the number of orientations P equal to eight, for dimensions $N \times M$ between four and one hundred, the predefined value is between 1,48 and 0,64; for dimensions $N \times M$ between one hundred and five hundred, the predefined value is between 0,64 and 0,49; for dimensions $N \times M$ between five hundred and one thousand, the predefined value is between 0,49 and 0,481; for dimensions $N \times M$ between one thousand and two thousand, the predefined value is between 0,481 and 0,475; for dimensions $N \times M$ greater than two thousand, the predefined value is between 0,475 and 0,463.

In a 22nd aspect according to at least of the preceding aspects from 1 to 16, given the number of orientations P equal to twelve, for dimensions $N \times M$ between four and one hundred, the predefined value is between 0,34 and 0,62; for dimensions $N \times M$ between one hundred and five hundred, the predefined value is between 0,62 and 0,48; for dimensions $N \times M$ between five hundred and one thousand, the predefined value is between 0,48 and 0,464; for dimensions $N \times M$ between one thousand and two thousand, the predefined value is between 0,464 and 0,457; for dimensions $N \times M$ greater than two thousand, the predefined value is between 0,457 and 0,446.

In a 23rd aspect according to at least one of the preceding aspects, the predefined value is obtained by means of the following steps performed by the electronic computing unit:

e) generating, by means of random number generator algorithm, a plurality of virtual random grids, optionally more than one thousand, optionally a number between one thousand and two thousand; each virtual random grid corresponding to a random matrix $N \times M$, wherein values of the elements of the matrix are the orientations $P_k$;

f) calculating the compression factors of said random matrices;

g) taking as predefined value an average value or the minimum value of said compression factors of the plurality of random matrices.

In a 24th aspect according to the preceding aspect, the predefined value is function of the dimension $N \times M$ and of the number of orientations P; wherein, given the number of orientations P, the process comprises: generating for each dimension $N \times M$ a respective plurality of random matrices; calculating the compression factors of each plurality of random matrices; taking as predefined values, one for each dimension, the average value or the minimum value of the compression factors of each plurality of random matrices.

In a 25th aspect according to the preceding aspect, it is provided to generate said respective plurality of random matrices for each one of the dimensions from 16 to 10.000.

In a 26th aspect according to the aspect 24 or 25, the process comprises the following steps performed by the electronic computing unit:

h) approximating the plurality of predefined values with an approximating function derived by means of nonlinear regression techniques;

i) choosing on the approximating function the predefined value corresponding to the size N × M of the ordered decorative modular grid to be made.

In a 27th aspect according to the aspect 26, if the number of orientations P is equal to two, the approximating function is the following

$$y = \frac{11577226403}{10000000000} x^{\frac{-1137646943}{5000000000}}$$

wherein y is the compression factor and x is the size N × M of the random matrix. In a 28th aspect according to the aspect 26, if the number of orientations P is equal to three, the approximating function is the following

$$y = \frac{11831473673}{10000000000} x^{\frac{-72189109}{400000000}}$$

wherein y is the compression factor and x is the size N × M of the random matrix. In a 29th aspect according to the aspect 26, if the number of orientations P is equal to four, the approximating function is the following

$$y = \frac{11469566321}{10000000000} x^{\frac{-9456621}{62500000}}$$

wherein y is the compression factor and x is the size N × M of the random matrix. In a 30th aspect according to the aspect 26, if the number of orientations P is equal to six, the approximating function is the following

$$y = \frac{10864678321}{10000000000} x^{\frac{-29431889}{250000000}}$$

wherein y is the compression factor and x is the size N × M of the random matrix. In a 31st aspect according to the aspect 26, if the number of orientations P is equal to eight, the approximating function is the following

$$y = \frac{1307851637}{1250000000} x^{\frac{-3929351}{40000000}}$$

wherein y is the compression factor and x is the size N × M of the random matrix. In a 32nd aspect according to the aspect 26, if the number of orientations P is equal to twelve, the approximating function is the following

$$y = \frac{4958333017}{5000000000} x^{\frac{-961980461}{10000000000}}$$

wherein y is the compression factor and x is the size N × M of the random matrix.

In a 33rd aspect according to at least one of the aspects from 24 to 33, the random number generator algorithm is chosen from the following: Linear Congruential Generators (LCGs), Mersenne Twister, XOR-Shift Generators, Fortuna, Blum Blum Shub, Well Equidistributed Long-period Linear (WELL), Middle Square Method, Lagged Fibonacci Generator and furthermore also the hardware random number generators and the virtual system devices such as /dev/random and /dev/urandom. In a 34th aspect according to at least one of the preceding aspects, the compression factors are calculated by means of lossless algorithms (without loss of information), optionally using the IETF RFC 1950 and 1951 compression standards.

In a 35th aspect according to at least one of the preceding aspects, the compression factors are calculated using the DEFLATE compression algorithm with compression level 6 (default).

In a 36th aspect, the present invention has also as object a processing apparatus, comprising an electronic computing unit configured to perform at least some of the steps a), b), c), d), e), f), g), h), i) previously shown.

In a 37th aspect according to the preceding aspect, the processing apparatus comprises an output device, optionally a display or a printer, configured to display the positioning matrices and the corresponding virtual ordered decorative modular grids and/or the chosen virtual ordered decorative modular grid.

In a 38th aspect, the present invention has also as object a plant for manufacturing sets of ordered decorative modular grids.

In a 39th aspect according to the preceding aspect, the plant is configured to implement the process described in one or more of the aspects from 1 to 35.

In a 40th aspect according to the aspect 38 or 39, the plant comprises:

- a manufacturing unit configured to mass produce said plurality of decorative modules;
- said processing apparatus according to the aspect 36 or 37;
- an optional coding unit configured to affix on each decorative module said at least one symbol or the first positioning code and the second positioning code.

In a 41st aspect according to the preceding aspect, the plant comprises furthermore a packing unit configured to pack in the package said decorative modules equipped with said at least one symbol or of the first positioning code and of the second positioning code.

In a 42nd aspect, the present invention has also as object a computer program (software) able to perform, when operating through an electronic computing unit, at least some of the steps a), b), c), d), e), f), g), h), i) previously shown.

Additional features and advantages will appear more from the detailed description of a preferred, but non-limiting, embodiment of processes for making ordered decorative modular grids according to the present invention.

Description of drawings

This description will be shown below with reference to the attached drawings, provided for illustrative purposes only and, therefore, non-limiting, in which:

- figure 1 is a flowchart showing a process for making ordered decorative modular grids according to the present invention;
- figure 2A and 2B show a decorative module usable in the process of figure 1 in respective orientations;
- figure 3 shows an ordered decorative modular grid obtained with the decorative module of figures 2A and 2B and by means of the process of figure 1;
- figures 4A - 4D show a different decorative module in respective orientations;
- figures 4E - 4H show the rear side of the decorative module of figures 4A - 4D;
- figures 5A - 5C show ordered decorative modular grids obtained with the module of figures 4A - 4D;
- figures 6A - 6F show a further decorative module in respective orientations;
- figures 7A - 7C show a further decorative module in respective orientations;
- figure 8 is a graph showing compression factors of random modular grids;
- figure 9 shows schematically a plant for manufacturing sets of ordered decorative modular grids;
- figure 10 shows a positioning matrix corresponding to the ordered decorative modular grid of figure 5C;
- figure 11 is a display of a computer program which implements part of the process of figure 1.

Detailed description

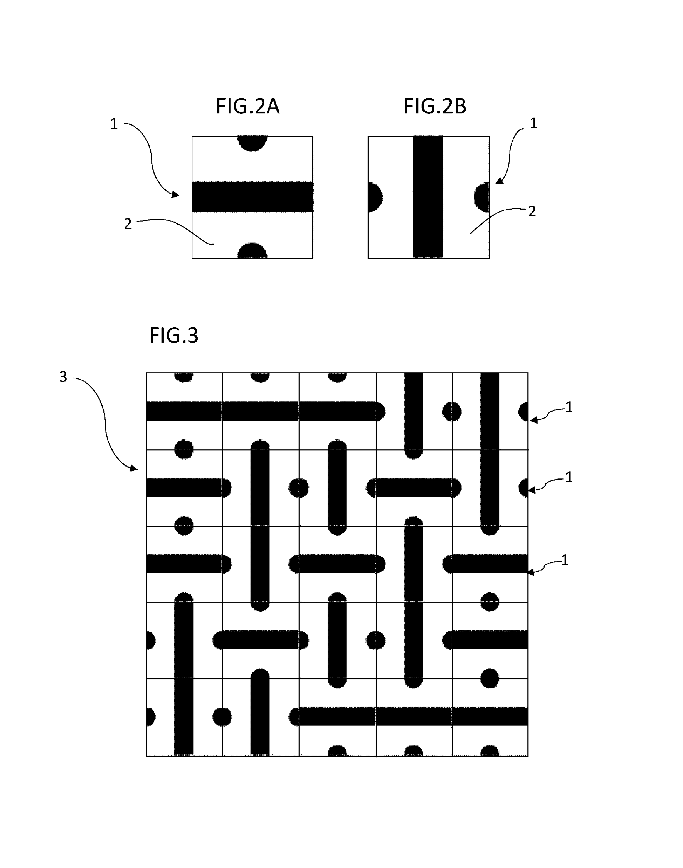

With reference to figures 2A and 2B, by reference number 1 is indicated a decorative module. Such a decorative module 1 can be for example a tile that has a square outline equipped with a first face 2 on which an ornamental pattern is realized. The tile can be flat but also concave or convex so that concave or convex surfaces can be covered. The shape of the ornamental pattern, the technique and the material with which it is realized are non-limiting. In the example shown in figures 2A and 2B, the ornamental pattern is represented by a black band on a white background and by two black semicircles arranged on opposite sides of the black band. As it can be seen, figure 2A and figure 2B show the same decorative module 1 in two positions that provide different visual aspects to each other. The decorative module 1 of figure 2A is rotated 90° clockwise or counterclockwise with respect to that of figure 2B around an axis perpendicular to the first face 2. Such decorative module 1, when it is inserted in a decorative modular grid 3 formed by a plurality of decorative modules 1 all equal to each other juxtaposed, such as that of figure 3, can therefore take only two orientations (P = 2), that is, only two visual aspects for an observer placed in front of a grid.

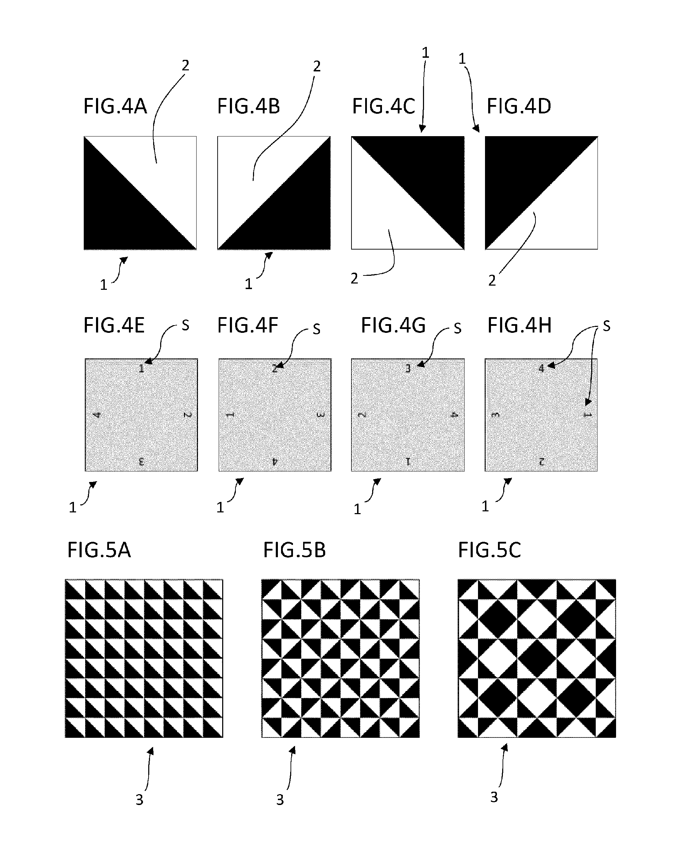

Figures 4A, 4B, 4C and 4D show a further example of decorative module still with square outline but equipped with an ornamental pattern such that the orientations possible in a decorative modular grid, such as those in the figures 5A, 5B, 5C, are four (P = 4).

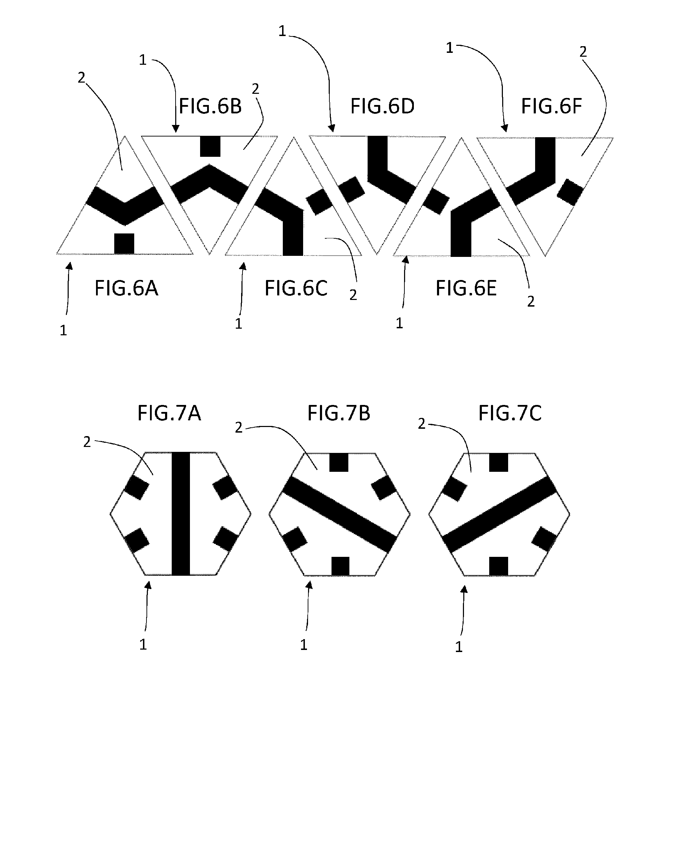

Figures 6A - 6F show a further example of decorative module this time with a triangular outline and equipped with an ornamental pattern such that the possible orientations in a decorative modular grid are six (P = 6).

Figures 7A, 7B, 7C show a further example of decorative module with hexagonal outline, specifically a regular hexagon, and equipped with an ornamental pattern such that the possible orientations in a decorative modular grid are three (P = 3).

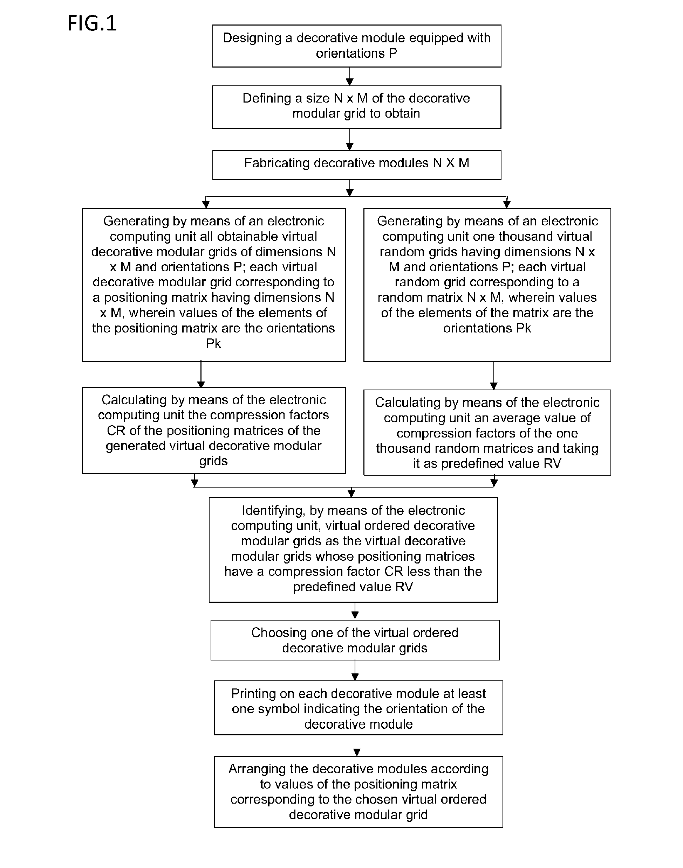

Figure 1 shows a flow chart of a process for making ordered decorative modular grids 3 that can be made with the ornamental patterns 1 shown above.

Once designed the decorative module, i.e. chosen the form of the decorative module among the triangle, the square or the hexagon, and defined the ornamental pattern, it is provided to choose the size N × M of the decorative modular grid 3 depending on the surface to be decorated. For example, the decorative modular grid 3 to be made is a matrix 5 × 5, i.e. formed by twenty-five elements as in figure 3, or a matrix 8 × 8, i.e. formed by sixty-four elements as in figures 5A, 5B, 5C.

It is then provided to fabricate N × M ornamental patterns 1 or anyway a sufficient number to be able to made one or more decorative modular grids 3.

Depending on the outline and the ornamental pattern, this decorative module 1 will have a certain number of orientations P. For example, the decorative module 1 can be realized in ceramic and the ornamental pattern printed in a tile-making plant. In other embodiments, the decorative module 1 is a panel of other material or materials, for example of plastic, stone, fabric. For example, the ornamental patterns 1 in fabric can be juxtaposed to form a carpet.

Given the size N × M of the decorative modular grid 3 and the orientations P of the decorative module 1, it is provided to generate, by means of an electronic computing unit (for example a working station or a PC), all the possible virtual decorative modular grids. Each virtual decorative modular grid is uniquely defined by the coordinate pairs $N_i$, $M_j$, and by the orientations $P_k$ of the respective virtual ornamental patterns. That is, for each position $N_i$, $M_j$ of the virtual decorative modular grid is defined the orientation $P_k$ of the respective virtual decorative module. Each virtual decorative modular grid corresponds therefore to a positioning matrix of dimensions N × M, wherein values of the elements of the positioning matrix are the orientations $P_k$.

For example, if the size N × M of the decorative modular grid 3 is equal to 5 × 5 (25 ornamental patterns 1) and the orientations of the decorative module are four (P = 4), the number of all the possible positioning matrices is equal to 4 raised to 25, i.e. 1.125.899.906.842.624. In order to be able to discern in this huge number of positioning matrices those that make ordered decorative modular grids 3, i.e., that guarantee some regularity in the distribution of the orientations P of the ornamental patterns 1 and therefore are more pleasing and recognizable, it is exploited the relationship between entropy and amount of information.

Entropy is a measure of disorder and randomness in a system. Consequently, a more ordered positioning matrix has a lower level of entropy with respect to a positioning matrix whose symbols, in this case the orientations of the decorative modules, are distributed in a more random and/or less ordered manner.

Furthermore, a data structure, in this case a positioning matrix, with high entropy can be compressed less efficiently than a data structure with low entropy i.e., whose data are more ordered.

So is it possible to use the compression factor as a means of measuring the level of entropy of a positioning matrix i.e., to understand if it is more or less ordered.

The electronic computing unit provides then to generate, by means of a random number generator algorithm, a plurality of virtual random positioning matrices, for example one thousand virtual random positioning matrices, of the same size N × M of the decorative modular grid 3 to be realized and calculating the compression factor CR of each of one thousand virtual random positioning matrices generated in order to identify those ordered.

Examples of algorithms and tools for generating random numbers are: Linear Congruential Generators (LCGs), Mersenne Twister, XOR-Shift Generators, Fortuna, Blum Blum Shub, Well Equidistributed Long-period Linear (WELL), Middle Square Method, Lagged Fibonacci Generator and furthermore also the hardware random number generators and the virtual system devices such as /dev/random and /dev/urandom (the latter used by us).

The compression factors CR are calculated by means of lossless algorithms (without loss of information). "Lossless" compression algorithms operate in two steps: the first generates a statistical model for the input data and the second uses this model to map the input data into sequences of bits such that 'likely' (i.e., frequently encountered) data produce shorter output with respect to 'unlikely' data. Compression is thus the more efficient the more ordered are the data to be compressed. Conversely, compression is all the more inefficient the more randomly distributed the data to be compressed are.

The compression factors CR can be calculated using IETF RFC 1950 and 1951 compression standards (RFC 1950: "ZLIB Compressed Data Format Specifica-on version 3.3"; RFC 1951: "DEFLATE Compressed Data Format Specifica-on version 1.3") and using the DEFLATE compression algorithm with compression level 6 (default).

For example it is possible to proceed to the compression of the serialized positioning matrices, i.e., of the string of symbols (values of the matrix) obtained by concatenating the rows of the original positioning matrix.

The compression factor CR of a positioning matrix is defined by the ratio of the size in bytes of the serialized compressed positioning matrix to the size in bytes of the serialized uncompressed positioning matrix and is generally between 0 and 1. In some cases the ratio may be greater than 1. The effectiveness of compression depends on the redundancy and repetition of the pattern in the data. Generally, for compression algorithms such as ZLIB, shorter strings or strings with less repetition (higher entropy) may not benefit much from compression or may even increase in size due to the addition of compression metadata. In terms of metadata, a block compressed with ZLIB will contain about 6 bytes of metadata (2-byte header + 4-byte checksum). Therefore, depending on the nature of the data to be compressed, effective space saving is achievable only if the data reaches a determined size and/or contains determined repeatable patterns (low entropy). In other words, small blocks of data or data with high entropy (for example, already compressed data, encrypted data or high-quality random data) may not benefit from ZLIB compression and may even increase in size when compressed.

Regardless of the "lossless" compression algorithm used, the compression factor CR of a positioning matrix depends on three parameters: the amount of entropy of the information encoded by the matrix, the size of the matrix (i.e., the size $N \times M$) and the cardinality of the symbol alphabet (i.e. the orientations P).

The electronic computing unit provides then to calculate an average value of the compression factors of the one thousand virtual random positioning matrices generated and to set it as predefined reference value RV.

The electronic computing unit recognizes, among all the possible virtual positioning matrices, the most ordered virtual positioning matrices as those having a compression factor CR less than the predefined reference value RV (CR < RV).

For example, the predefined value is 1.5, optionally 0.6, optionally 0.3, optionally 0.2. The smaller is the predefined value RV, the greater will be the order of the resulting virtual positioning matrices. Then, based on the desired order, it is possible to set as predefined value also a value different from the average value of the compression factors of the one thousand virtual random positioning matrices, for example the minimum value of the compression factors of the plurality of virtual random positioning matrices. It is possible also to set a value "range": the compression factor must be less than the above-mentioned predefined value RV and greater than a further predefined value.

For example, for positioning matrices $5 \times 5$ with P = 2, the predefined reference value RV calculated as above is equal to 0,85 and the positioning matrix corresponding to the decorative modular grid of figure 3 ($N \times M = 5 \times 5$, P = 2) has a compression factor of 0,76.

For example, for positioning matrices $8 \times 8$ with P = 4, the predefined reference value RV calculated as above is equal to 0,674. The positioning matrix corresponding to the decorative modular grid of figure 5A ($N \times M = 8 \times 8$, P = 4) has a compression factor of 0,1875. The positioning matrix corresponding to the decorative modular grid of figure 5B ($N \times M = 8 \times 8$, P = 4) has a compression factor of 0,2968. The positioning matrix corresponding to the decorative modular grid of figure 5C ($N \times M = 8 \times 8$, P = 4) has a compression factor of 0,4687.

At this point, it is possible to choose one or more of the virtual ordered decorative modular grids thus defined and prepare respective sets of the decorative modules 1 destined for the realization of respective real decorative modular grids 3, for example to cover a wall or a floor. The choice (step d) can be made automatically by the electronic computing unit or by an attendant/operator who views the virtual ordered decorative modular grids identified.

To this end, on a second face or to an edge of each decorative module 1 is affixed, for example printed, screen printed or labeled, a first positioning code corresponding to the respective coordinate pair $N_i$, $M_j$ and a second positioning code corresponding to the respective orientation $P_k$. The ornamental patterns 1 are then packed in respective packages and shipped, for example, to a warehouse or construction site. The first positioning code and/or the second positioning code can be numbers, letters or can be grouped into a barcode or in a QR code. The ornamental patterns can also be arranged, for example stacked, in the package ordering them according to the first positioning code and already oriented according to the second positioning code, so that the operator, opening the package, finds each module already oriented correctly.

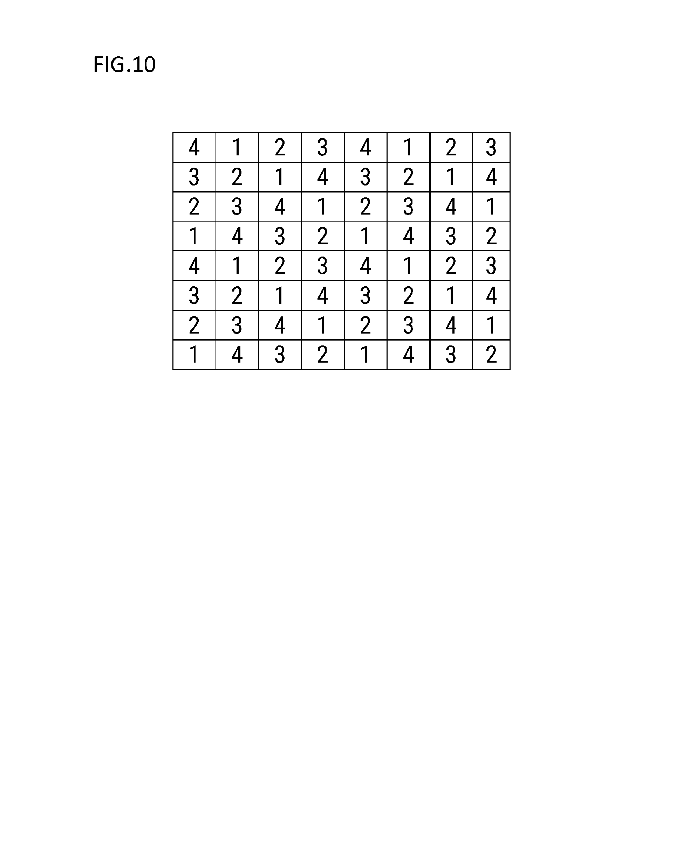

The operator can then arrange/pose the ornamental patterns, on the wall or on the floor, according to the first positioning code and with the second positioning code. In a variant, instead of the first positioning code and the second positioning code, as many different S-symbols are affixed to each of the ornamental patterns as are the possible orientations P of that decorative module, so that an operator can orient and position the decorative module by adhering to the S-symbols in accordance with the corresponding orientation symbols indicated in the positioning matrix. The S symbols and their position are the same on all the decorative modules. Figures 4E - 4H show four S symbols (numbers 1, 2, 3, 4) associated with the four orientations of figures 4A - 4D. The number shown near the upper side indicates the orientation. The operator, for example, displays the positioning matrix of figure 10 that corresponds to the chosen virtual decorative modular grid of figure 5C on a display or printed sheet and arranges/poses the decorative modules according to the orientations indicated on the positioning matrix. The values of the elements of the positioning matrix of figure 10 are the S symbols placed near the upper side of the decorative modules oriented according to the chosen decorative modular grid of figure 5C.

The above-mentioned S symbols and codes can also be part of adhesive labels placed on the first face 2 and such that they can be removed by the operator during the installation of the decorative modules 1.

As mentioned above, the compression factor CR of a positioning matrix depends, further than on the amount of entropy of the information of the positioning matrix itself, also on the size (N × M) of the positioning matrix and on the orientations P of the decorative module 1. Then, the compression factors CR of the virtual random positioning matrices depend on N × M and on P and the predefined value RV can be chosen according to N × M and P, for example as in the following Tables 1 and 2.

Table 1

|  | P = 2 | P = 3 | P = 4 |
|---|---|---|---|
| 4 < N × M < 100 | 1,12 < RV < 0,43 | 1,3 < RV < 0,52 | 1,4 < RV < 0,56 |
| 100 < N × M < 500 | 0,43 < RV < 0,24 | 0,52 < RV < 0,33 | 0,56 < RV < 0,39 |
| 500 < N × M < 1000 | 0,24 < RV < 0,21 | 0,33 < RV < 0,3 | 0,39 < RV < 0,36 |
| 1000 < N × M < 2000 | 0,21 < RV < 0,189 | 0,3 < RV < 0,28 | 0,36 < RV < 0,343 |
| N × M > 2000 | 0,189 < RV < 0,166 | 0,28 < RV < 0,25 | 0,343 < RV < 0,318 |

Table 2

|  | P = 6 | P = 8 | P = 12 |
|---|---|---|---|
| 4 < N × M < 100 | 1,46 < RV < 0,6 | 1,48 < RV < 0,64 | 0,34 < RV < 0,62 |
| 100 < N × M < 500 | 0,6 < RV < 0,456 | 0,64 < RV < 0,49 | 0,62 < RV < 0,48 |
| 500 < N × M < 1000 | 0,456 < RV < 0,437 | 0,49 < RV < 0,481 | 0,48 < RV < 0,464 |
| 1000 < N × M < 2000 | 0,437 < RV < 0,424 | 0,481 < RV < 0,475 | 0,464 < RV < 0,457 |
| N × M > 2000 | 0,424 < RV < 0,4 | 0,475 < RV < 0,463 | 0,457 < RV < 0,446 |

According to a possible criterion, the electronic computing unit is configured to generate for each one of the dimensions N × M from 16 to 10.000 a respective plurality of virtual random positioning matrices, calculate the compression factors of each plurality of virtual random positioning matrices, take as predefined values, one for each dimension, the average value or the minimum value of the compression factors of each plurality of virtual random positioning matrices and approximate the plurality of predefined values with an approximating function derived by means of nonlinear regression techniques.

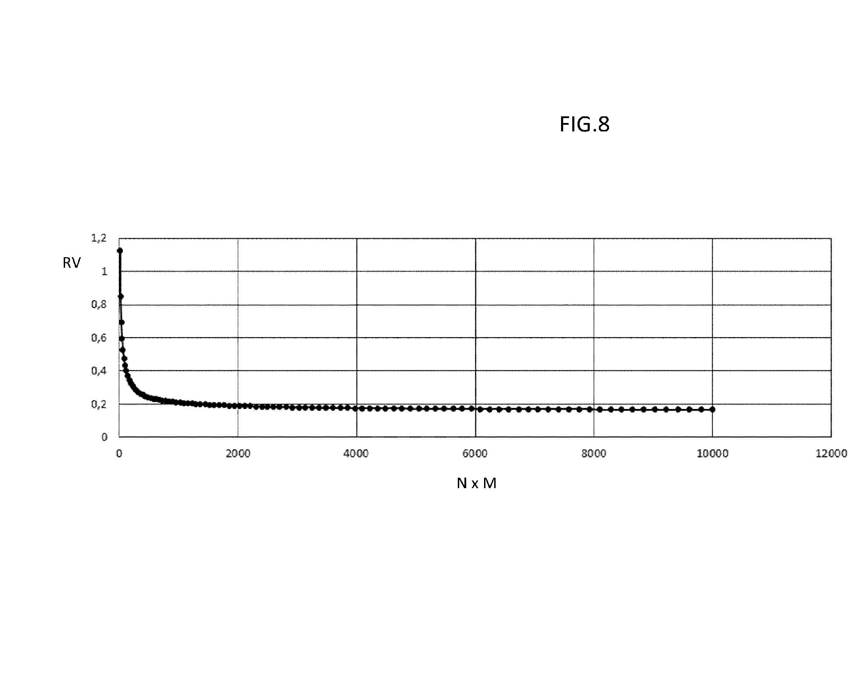

Figure 8 shows the compression factors CR of random positioning matrices (i.e. non-ordered, i.e., with high entropy) with variable dimensions N × M between 16 and 10,000 elements over an alphabet of two symbols (P = 2).

The approximating function derived by means of the nonlinear regression techniques is the following.

$$y = \frac{11577226403}{10000000000} x^{\frac{-1137646943}{5000000000}}$$

y: compression factor CR
x: size N × M

It is then possible to choose on the approximating function the predefined value corresponding to the size N × M of the positioning matrix corresponding to the ordered decorative modular grid to be made.

The following Table 3 lists the approximating functions of the compression factors CR of random positioning matrices with different P (and with N × M between 16 and 10.000).

Table 3

| P | |
|---|---|
| 3 | $y = \dfrac{11831473673}{10000000000}\, x^{\frac{-72189109}{400000000}}$ |
| 4 | $y = \dfrac{11469566321}{10000000000}\, x^{\frac{-9456621}{62500000}}$ |
| 6 | $y = \dfrac{10864678321}{10000000000}\, x^{\frac{-29431889}{250000000}}$ |
| 8 | $y = \dfrac{1307851637}{1250000000}\, x^{\frac{-3929351}{40000000}}$ |
| 12 | $y = \dfrac{4958333017}{5000000000}\, x^{\frac{-961980461}{10000000000}}$ |

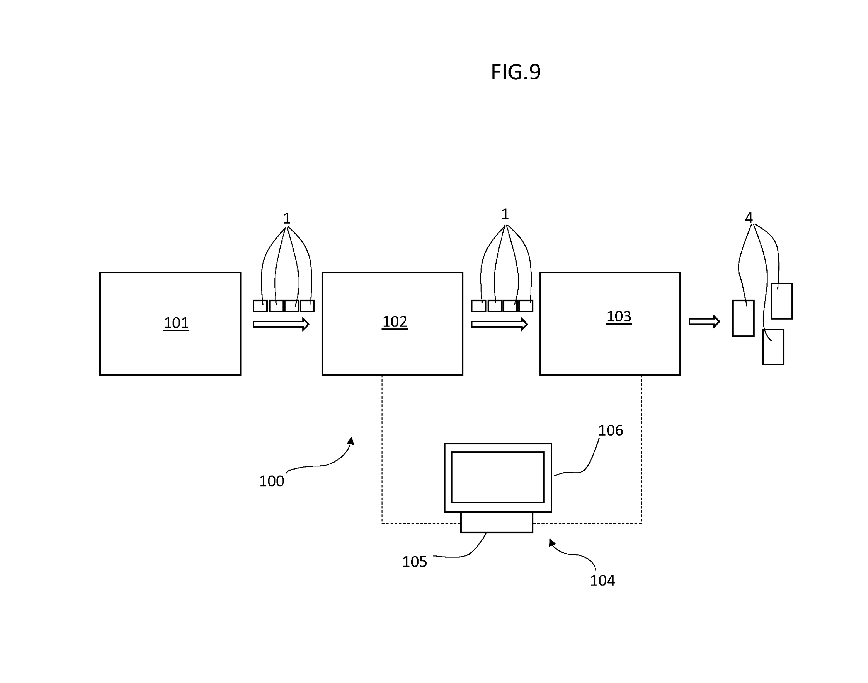

Figure 9 shows schematically an example of a plant 100 for making sets of ordered decorative modular grids configured to perform the above-described process.

The shown plant 100 comprises a manufacturing unit 101 configured to mass produce the ornamental patterns 1. A coding unit 102 is operatively placed downstream of the manufacturing unit 101 and is configured to affix on each decorative module 1 the symbols S indicating the orientation of the decorative module 1 (for example as in figures 4E - 4H) or the first positioning code and the second positioning code. In variants of the plant 1, the symbols S and/or positioning codes can be affixed already during production, i.e. concurrently with the production of the decorative module 1 itself in the manufacturing unit 101. A packing unit 103 is placed operatively downstream of the coding unit 102 and is configured to pack in packages 4 said decorative modules equipped with the above-mentioned symbols S indicating the orientation or the first positioning code and the second positioning code.

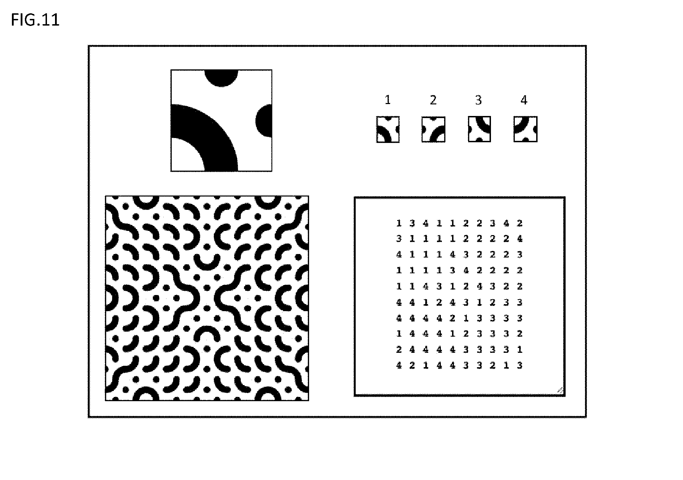

The plant 100 comprises furthermore, or is operationally connected to, a processing apparatus 104 (for example a working station or a PC) that comprises an electronic computing unit 105 and a display 106. The electronic computing unit 105 is configured to perform, by means of a computer program (software), the steps of the process previously shown. The virtual ordered decorative modular grids and/or the chosen virtual ordered decorative modular grid and the corresponding positioning matrices can be shown on the display 106. For example, figure 11 shows a screen generated by the program showing the decorative module, the possible orientations (1, 2, 3, 4), the chosen virtual ordered decorative modular grid (on the left) and the corresponding positioning matrix (on the right).

The processing apparatus 104 can furthermore be connected to the manufacturing unit 101, to the coding unit 102 and to the packing unit 103 to check its operation. For example, once chosen the virtual ordered decorative modular grid, the processing apparatus 104 can command, where the positioning codes are not already affixed by the manufacturing unit 101, the coding unit 102 so that it affixes on each decorative module 1 one or more positioning codes i.e. the first positioning code and the second positioning code. Contextually it is printed and/or displayed the corresponding positioning matrix.

List of elements

1       decorative module
2       first face
3       decorative modular grid
4       package
100     plant
101     manufacturing unit
102     coding unit

103    packing unit
104    processing apparatus
105    electronic computing unit
106    display

**Claims**

1.   Process for making ordered decorative modular grids, comprising:

fabricating a plurality of decorative modules (1) all having a same outline and a same ornamental pattern; said outline being a triangle or a rectangle or a hexagon so that said decorative modules placed side by side form a decorative modular grid (3) of size N × M having a continuous surface; each decorative module (1) being able to take on in the decorative modular grid (3) a number of orientations P defined by rotations, wherein, for each orientation $P_k$, the ornamental pattern takes on in the decorative modular grid (3) a respective visual appearance different from the visual appearance of a different orientation;
generating, by means of an electronic computing unit (105), a plurality of virtual ordered decorative modular grids through the following steps:

a) generating all obtainable virtual decorative modular grids, each virtual decorative modular grid being uniquely defined by the coordinate pairs $N_i$, $M_j$, and by the orientations $P_k$ of the decorative modules (1); each virtual decorative modular grid corresponding to a positioning matrix having dimensions N × M, wherein values of the elements of the positioning matrix are the orientations $P_k$;
b) calculating compression factors (CR) of the positioning matrices of each of the virtual decorative modular grids generated in (a);
c) identifying, among all the virtual decorative modular grids generated in (a), the virtual decorative modular grids whose positioning matrices have a compression factor (CR), as calculated in (b), less than a predefined value (VR) and tagging them as virtual ordered decorative modular grids; wherein the decorations obtained by arranging the decorative modules (1) according to the values of the positioning matrices corresponding to the virtual ordered decorative modular grids are visually pleasing and recognizable;

arranging/posing the decorative modules (1) according to the values of the positioning matrix corresponding to one of the virtual ordered decorative modular grids chosen.

2.   Process according to claim 1, wherein said one of the virtual ordered decorative modular grids is (d) chosen in an automatic way by the electronic computing unit (105) among the virtual ordered decorative modular grids identified in (c).

3.   Process according to claim 1 or 2, comprising: affixing on each decorative module (1) at least one symbol (S) indicating the orientation of the decorative module (1) and the same for all decorative modules (1); wherein arranging/posing the decorative modules (1) comprises: arranging/posing said decorative modules (1) according to said at least one symbol.

4.   Process according to claim 3, wherein each decorative module (1) has a first face (2), bearing the ornamental pattern, and a second face, opposite to the first face (2); wherein said at least one symbol (S) is affixed to the second face or to an edge of the decorative module (1).

5.   Process according to claim 3 or 4, comprising: before arranging/posing the decorative modules (1), packing in a package (4) said decorative modules (1) equipped with said at least one symbol (S) and belonging to said one of the virtual ordered decorative modular grids.

6.   Process according to one of claims 1 to 5, where the predefined value (RV) is 1.5, optionally 0.6, optionally 0.3, optionally 0.2.

7.   Process according to one of claims 1 to 6, wherein the predefined value (RV) is obtained through the following steps performed by the electronic computing unit (104):

e) generating, through a random number generator algorithm, a plurality of virtual random grids, optionally more than one thousand, optionally a number between one thousand and two thousand; each virtual random grid corresponding to a random matrix N × M, wherein values of the elements of the matrix are the orientations $P_k$;
f) calculating the compression factors (CR) of said random matrices;
g) taking an average value or the minimum value of said compression factors (CR) of the plurality of random matrices as the predefined value (RV).

8. Process according to claim 7, wherein the predefined value (RV) is a function of the dimension N × M and the number of orientations P; wherein, given the number of orientations P, the process comprises: generating for each dimension N × M, optionally for dimensions 16 to 10.000, a respective plurality of random matrices; computing the compression factors (CR) of each plurality of random matrices; taking as predefined values, one for each dimension, the average value or the minimum value of the compression factors (CR) of each plurality of random matrices.

9. Process according to claim 8, wherein, given the number of orientations P equal to two, for dimensions N × M between four and one hundred, the predefined value (RV) is between 1,12 and 0,43; for dimensions N × M between one hundred and five hundred, the predefined value (RV) is between 0,43 and 0,24; for dimensions N × M between five hundred and one thousand, the predefined value (RV) is between 0,24 and 0,21; for dimensions N × M between one thousand and two thousand, the predefined value (RV) is between 0,21 and 0,189; for dimensions N × M greater than two thousand, the predefined value (RV) is between 0,189 and 0,166; wherein, given the number of orientations P equal to three, for dimensions N × M between four and one hundred, the predefined value (RV) is between 1,3 and 0,52; for dimensions N × M between one hundred and five hundred, the predefined value (RV) is between 0,52 and 0,33; for dimensions N × M between five hundred and one thousand, the predefined value (RV) is between 0,33 and 0,3; for dimensions N × M between one thousand and two thousand, the predefined value (RV) is between 0,3 and 0,28; for dimensions N × M greater than two thousand, the predefined value (RV) is between 0,28 and 0,25; wherein, given the number of orientations P equal to four, for dimensions N × M between four and one hundred, the predefined value (RV) is between 1,4 and 0,56; for dimensions N × M between one hundred and five hundred, the predefined value (RV) is between 0,56 and 0,39; wherein, for dimensions N × M between five hundred and one thousand, the predefined value (RV) is between 0,39 and 0,36; for dimensions N × M between one thousand and two thousand, the predefined value (RV) is between 0,36 and 0,343; for dimensions N × M greater than two thousand, the predefined value (RV) is between 0,343 and 0,318; wherein, given the number of orientations P equal to six, for dimensions N × M between four and one hundred, the predefined value (RV) is between 1,46 and 0,6; for dimensions N × M between one hundred and five hundred, the predefined value (RV) is between 0,6 and 0,456; wherein, for dimensions N × M between five hundred and one thousand, the predefined value (RV) is between 0,456 and 0,437; for dimensions N × M between one thousand and two thousand, the predefined value (RV) is between 0,437 and 0,424; for dimensions N × M greater than two thousand, the predefined value (RV) is between 0,424 and 0,4; wherein, given the number of orientations P equal to eight, for dimensions N × M between four and one hundred, the predefined value (RV) is between 1,48 and 0,64; for dimensions N × M between one hundred and five hundred, the predefined value (RV) is between 0,64 and 0,49; for dimensions N × M between five hundred and one thousand, the predefined value (RV) is between 0,49 and 0,481; for dimensions N × M between one thousand and two thousand, the predefined value (RV) is between 0,481 and 0,475; for dimensions N × M greater than two thousand, the predefined value (RV) is between 0,475 and 0,463; wherein, given the number of orientations P equal to twelve, for dimensions N × M between four and one hundred, the predefined value (RV) is between 0,34 and 0,62; for dimensions N × M between one hundred and five hundred, the predefined value (RV) is between 0,62 and 0,48; for dimensions N × M between five hundred and one thousand, the predefined value (RV) is between 0,48 and 0,464; for dimensions N × M between one thousand and two thousand, the predefined value (RV) is between 0,464 and 0,457; for dimensions N × M greater than two thousand, the predefined value (RV) is between 0,457 and 0,446.

10. Process according to claim 8 or 9, comprising the following steps performed by the electronic computing unit: h) approximating the plurality of predefined values (RV) with an approximating function derived by nonlinear regression techniques; i) choosing on the approximating function the predefined value (RV) corresponding to the N × M dimension of the ordered decorative modular grid to be made.

11. Process according to claim 10, wherein if the number of orientations P is equal to two, the approximating function is the following

$$y = \frac{11577226403}{10000000000} \, x^{\frac{-1137646943}{500000000}}$$

wherein, if the number of orientations P is equal to three, the approximating function is the following

$$y = \frac{11831473673}{10000000000} x^{\frac{-72189109}{400000000}}$$

wherein, if the number of orientations P is equal to four, the approximating function is the following

$$y = \frac{11469566321}{10000000000} x^{\frac{-9456621}{62500000}}$$

wherein, if the number of orientations P is equal to six, the approximating function is the following

$$y = \frac{10864678321}{10000000000} x^{\frac{-29431889}{250000000}}$$

wherein, if the number of orientations P is equal to eight, the approximating function is the following

$$y = \frac{1307851637}{1250000000} x^{\frac{-3929351}{40000000}}$$

wherein, if the number of orientations P is equal to twelve, the approximating function is the following

$$y = \frac{4958333017}{5000000000} x^{\frac{-961980461}{10000000000}}$$

wherein y is the compression factor and x is the size N × M of the random matrix.

12. Process according to one of claims 7 to 11, wherein the random number generator algorithm is chosen from the following: Linear Congruential Generators (LCGs), Mersenne Twister, XOR-Shift Generators, Fortuna, Blum Blum Shub, Well Equidistributed Long-period Linear (WELL), Middle Square Method, Lagged Fibonacci Generator, hardware random number generators, and virtual system devices such as /dev/random and /dev/urandom.

13. Process according to one of claims 1 to 12, wherein the compression factors (CR) are calculated by lossless algorithms, optionally using the IETF RFC 1950 and 1951 compression standards, and optionally the DEFLATE compression algorithm with compression level 6 (default).

14. Processing apparatus, comprising an electronic computing unit (105) configured to perform steps (a), (b), (c) of claim 1, optionally step (d) of claim 2 and/or steps (e), (f), (g) of claim 7 and/or steps (h), (i) of claim 10; an output device, optionally a display (106) or a printer, configured to display the positioning matrices and the corresponding virtual ordered decorative modular grids and/or the chosen virtual ordered decorative modular grid.

15. Plant for manufacturing sets of ordered decorative modular grids, the plant (100) being configured to implement the process according to one or more of claims 1 to 13, the plant (100) comprising:

   a manufacturing unit (101) configured to mass produce said plurality of decorative modules (1);
   the processing apparatus (104) of claim 14;
   a coding unit (102) configured to affix at least one symbol (S) to each decorative module (1) said;
   a packing unit (103) configured to pack in the package (4) said decorative modules (1) equipped with said at least one symbol (S).

FIG.1

```
┌─────────────────────────────────────┐
│ Designing a decorative module        │
│ equipped with orientations P         │
└─────────────────────────────────────┘
                 │
                 ▼
┌─────────────────────────────────────┐
│ Defining a size N x M of the         │
│ decorative modular grid to obtain    │
└─────────────────────────────────────┘
                 │
                 ▼
┌─────────────────────────────────────┐
│ Fabricating decorative modules N X M │
└─────────────────────────────────────┘
```

| Generating by means of an electronic computing unit all obtainable virtual decorative modular grids of dimensions N x M and orientations P; each virtual decorative modular grid corresponding to a positioning matrix having dimensions N x M, wherein values of the elements of the positioning matrix are the orientations Pk | Generating by means of an electronic computing unit one thousand virtual random grids having dimensions N x M and orientations P; each virtual random grid corresponding to a random matrix N x M, wherein values of the elements of the matrix are the orientations Pk |
| --- | --- |
| Calculating by means of the electronic computing unit the compression factors CR of the positioning matrices of the generated virtual decorative modular grids | Calculating by means of the electronic computing unit an average value of compression factors of the one thousand random matrices and taking it as predefined value RV |

Identifying, by means of the electronic computing unit, virtual ordered decorative modular grids as the virtual decorative modular grids whose positioning matrices have a compression factor CR less than the predefined value RV

Choosing one of the virtual ordered decorative modular grids

Printing on each decorative module at least one symbol indicating the orientation of the decorative module

Arranging the decorative modules according to values of the positioning matrix corresponding to the chosen virtual ordered decorative modular grid

EP 4 546 198 A1

FIG.2A

FIG.2B

FIG.3

16

FIG.4A    FIG.4B    FIG.4C    FIG.4D

FIG.4E    FIG.4F    FIG.4G    FIG.4H

FIG.5A    FIG.5B    FIG.5C

FIG.6B

FIG.6D

FIG.6F

FIG.6A

FIG.6C

FIG.6E

FIG.7A

FIG.7B

FIG.7C

FIG.8

EP 4 546 198 A1

FIG.9

FIG.10

| 4 | 1 | 2 | 3 | 4 | 1 | 2 | 3 |
|---|---|---|---|---|---|---|---|
| 3 | 2 | 1 | 4 | 3 | 2 | 1 | 4 |
| 2 | 3 | 4 | 1 | 2 | 3 | 4 | 1 |
| 1 | 4 | 3 | 2 | 1 | 4 | 3 | 2 |
| 4 | 1 | 2 | 3 | 4 | 1 | 2 | 3 |
| 3 | 2 | 1 | 4 | 3 | 2 | 1 | 4 |
| 2 | 3 | 4 | 1 | 2 | 3 | 4 | 1 |
| 1 | 4 | 3 | 2 | 1 | 4 | 3 | 2 |

FIG.11

Europäisches
Patentamt

European
Patent Office

Office européen
des brevets

# EUROPEAN SEARCH REPORT

**Application Number**

EP 24 20 8311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2008/103449 A1 (COLLINS & AIKMAN FLOORCOVERING [US]; BARNES JHANE [US]) 28 August 2008 (2008-08-28) | 1-14 | INV.<br>G06F30/13<br>B44C1/28 |
| Y | * abstract; claims 18-20; figures 1A-1D, 2A-2Z, 3A-3H, 4A-8E, 9A-11C * | 15 | B44C3/12 |
|  | - - - - - |  | ADD. |
| X | WO 2005/026863 A2 (STUDIOSTAMPA INC [CA]; STAMP ARLENE [CA]) 24 March 2005 (2005-03-24) | 14 | G06F111/20<br>B44F11/04<br>E04F13/00 |
| A | * abstract; claims 1-4; figures 1, 2a-2c, 3a-3b, 4a-4e, 5a-5c *<br>* pages 17-21 * | 1-13,15 | E04F15/00<br>G09B25/04 |
|  | - - - - - |  |  |
| Y | US 2016/116903 A1 (GUERRA IGARZA JUAN CARLOS [US]) 28 April 2016 (2016-04-28) | 15 |  |
| A | * abstract; claims 1-7; figures 1-18 *<br>* page 4, paragraph [0062]-[0063] * | 1-14 |  |
|  | - - - - - |  |  |
| A | US 5 430 831 A (SNELLEN THEODORUS C C M [NL]) 4 July 1995 (1995-07-04)<br>* abstract; claims 1-18; figures 1-10 *<br>* column 4, line 35 - column 22, line 29 * | 1-14 | TECHNICAL FIELDS SEARCHED (IPC)<br><br>G06F<br>E04F |
|  | - - - - - |  | B44C |
| A | EP 2 732 980 B1 (KOSTULSKI THOMAS [DE]) 18 April 2018 (2018-04-18)<br>* abstract; claims 1-10; figures 1a-1b, 2a-2c, 4a-4c * | 1-14 | G09B |
|  | - - - - - |  |  |
| A | US 2011/126483 A1 (GARCIA DORADO JOSE IGNACIO [US]) 2 June 2011 (2011-06-02)<br>* abstract; figures 1-9 * | 1 |  |
|  | - - - - -<br>-/-- |  |  |

The present search report has been drawn up for all claims

| Place of search | Date of completion of the search | Examiner |
|---|---|---|
| Munich | 19 March 2025 | Fernandez, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WOUTER BAERT ET AL: "ATC: an Advanced Tucker Compression library for multidimensional data", ARXIV.ORG, CORNELL UNIVERSITY LIBRARY, 201 OLIN LIBRARY CORNELL UNIVERSITY ITHACA, NY 14853, 9 February 2023 (2023-02-09), XP091432216, * the whole document * | 1 | |

-----

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Munich | 19 March 2025 | Fernandez, Eva |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                   
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 8311

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | | Publication date | Patent family member(s) | | | Publication date |
|---|---|---|---|---|---|---|---|
| WO 2008103449 | A1 | | 28-08-2008 | AU | 2008218985 | A1 | 28-08-2008 |
| | | | | CA | 2678843 | A1 | 28-08-2008 |
| | | | | CN | 101765390 | A | 30-06-2010 |
| | | | | DK | 2124684 | T3 | 08-02-2016 |
| | | | | EP | 2124684 | A1 | 02-12-2009 |
| | | | | EP | 2508107 | A2 | 10-10-2012 |
| | | | | ES | 2559063 | T3 | 10-02-2016 |
| | | | | HK | 1132637 | A1 | 05-03-2010 |
| | | | | JP | 5302222 | B2 | 02-10-2013 |
| | | | | JP | 5800860 | B2 | 28-10-2015 |
| | | | | JP | 2010519425 | A | 03-06-2010 |
| | | | | JP | 2013231270 | A | 14-11-2013 |
| | | | | KR | 20100014541 | A | 10-02-2010 |
| | | | | MX | 349444 | B | 28-07-2017 |
| | | | | MX | 363054 | B | 06-03-2019 |
| | | | | PT | 2124684 | E | 09-02-2016 |
| | | | | US | 2010086722 | A1 | 08-04-2010 |
| | | | | US | 2011185548 | A1 | 04-08-2011 |
| | | | | US | 2012128913 | A1 | 24-05-2012 |
| | | | | US | 2013236707 | A1 | 12-09-2013 |
| | | | | WO | 2008103449 | A1 | 28-08-2008 |
| WO 2005026863 | A2 | | 24-03-2005 | NONE | | | |
| US 2016116903 | A1 | | 28-04-2016 | NONE | | | |
| US 5430831 | A | | 04-07-1995 | NONE | | | |
| EP 2732980 | B1 | | 18-04-2018 | DE | 102012220762 | A1 | 15-05-2014 |
| | | | | EP | 2732980 | A1 | 21-05-2014 |
| | | | | ES | 2673737 | T3 | 25-06-2018 |
| | | | | TR | 201809568 | T4 | 23-07-2018 |
| US 2011126483 | A1 | | 02-06-2011 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008103449 A1

**Non-patent literature cited in the description**

- ZLIB Compressed Data Format Specifica-on version 3.3. *RFC 1950*

- DEFLATE Compressed Data Format Specifica-on version 1.3. *RFC 1951*